# EUROPEAN PATENT SPECIFICATION

(11) **EP 4 496 091 B1**
(45) Date of publication and mention of the grant of the patent: **03.12.2025**
(21) Application number: 24187959.2
(22) Date of filing: 11.07.2024
(51) Int. Cl.: H01M 50/209, H01M 50/249, H01M 50/502, H01M 50/503, H01M 50/507, H01M 50/514, H01M 10/48

(54) **BATTERY PACK FOR AN ELECTRIC-POWERED ROAD VEHICLE AND ELECTRIC-POWERED ROAD VEHICLE EQUIPPED WITH SUCH A BATTERY PACK**
BATTERIEPACK FÜR EIN ELEKTRISCH ANGETRIEBENES STRASSENFAHRZEUG UND ELEKTRISCH ANGETRIEBENES STRASSENFAHRZEUG MIT SOLCH EINEM BATTERIEPACK
BLOC-BATTERIE POUR VÉHICULE ROUTIER À PROPULSION ÉLECTRIQUE ET VÉHICULE ROUTIER À PROPULSION ÉLECTRIQUE ÉQUIPÉ D'UN TEL BLOC-BATTERIE

(30) Priority: 17.07.2023 IT 202300014934
(43) Date of publication of application: 22.01.2025
(73) Proprietor: FERRARI S.p.A., 41100 Modena (IT)
(72) Inventor: DIMATTEO, Vincenzo, 41100 MODENA (IT); POGGIO, Luca, 41100 MODENA (IT); TRONCOSO, Matias, 41100 MODENA (IT); VENTURI, Enrico, 41100 MODENA (IT); ZAMPOLINI, Federico, 41100 MODENA (IT)
(74) Representative: Studio Torta S.p.A.

(56) References cited:
- EP-A1- 4 092 794
- EP-A1- 4 092 795
- KR-A- 20220 115 077
- US-A1- 2018 108 898
- US-A1- 2022 367 925
- US-B2- 11 094 974

## Description

### CROSS-REFERENCE TO RELATED APPLICATIONS

This patent application claims priority from Italian patent application no. 102023000014934 filed on July 17, 2023.

### TECHNICAL FIELD

The technical field of the present invention refers to the sector of electric-powered road vehicles. Such indication comprises both the road vehicles powered only electrically, and road vehicles powered both electrically and endothermically. Still more specifically, the present invention refers to a battery pack, namely a battery pack to be mounted in the aforementioned road vehicle and configured to store electric energy to be supplied during the electric propulsion. In such background, the present invention will deal with the problem of how to improve the monitoring of the voltage of the single cells forming the battery pack. Finally, the present invention also refers to a road vehicle comprising an aforementioned battery pack.

### PRIOR ART

In the automotive industry, and in particular with reference to the electric-powered road vehicles, it is known to utilize lithium batteries for storing electric energy to be supplied during the electric propulsion. In fact, such lithium batteries offer a high energy density ideal for implementing the electric power in the automotive industry. Currently, in fact, lithium polymers represent, from the chemical point of view, the state of the art in the production of high-capacity batteries. In such batteries, the interconnection in series and in parallel of various cells (generally, each of 3.7 V) is provided for reaching the desired total voltage and energy density for a battery pack. The battery modules usually available on the market (not only the automotive one, but also that of the consumer electronics) often comprise planar pouch batteries, which have a very limited thickness with respect to the other dimensions. Two very wide opposite faces (through which the heat is almost integrally dissipated) are identified, as well as four thin and elongated sides, wherein the positive and negative terminals of the cell are arranged on one side or on two opposite sides. Specifically, a known electric energy storage system for an electric-powered road vehicle comprises a battery pack consisting of a plurality of battery modules electrically connected to one another. Each battery module comprises, in turn, a support structure which carries a plurality of electrochemical cells electrically connected to one another in series and in parallel. In a known manner, also an electric connector is provided for connecting the battery pack to the propulsion system of the vehicle as well as a control unit (normally called BMS - "Battery Management System") which interacts with all of the battery modules so as to control and manage each cell or sets of electrochemical cells of each battery module.

As is known, in such structure each electrochemical cell has a positive pole at an end and a negative pole at an opposite end (or at the same end) and the control unit (i.e. the BMS) connected to each pole of the electrochemical cells so as to control the voltage values of each electrochemical cell. Generally, the connection of the poles of the single electrochemical cells to the control unit occurs by means of a plurality of electric cables which extend inside the storage system. The presence of this plurality of electric cables complicates the structure and the assembly of the electric energy storage system, involves an increase in the volumes, in the bulks and in the weights of the electric energy storage system, and risks compromising the safety of the electric energy storage system, especially since there can be a significant voltage difference also in the order of several hundreds of Volts between the cables connecting the initial electrochemical cells of the battery pack and the cables connecting the final electrochemical cells of the battery pack.

EP4092795, by the same Applicant of the present invention, describes an alternative solution to the aforementioned electric cables monitoring the voltage of the electrochemical cells of the battery pack. In brief, the solution described in EP4092795 provides for equipping the battery with a control unit directly facing the cells and on another side protected by a specially provided casing in which the sensor elements for sensing the voltage of the cells comprise a plurality of elastically deformable conductors, in practice a sort of spring elements, on one side directly fixed to the control unit and on the other side, in use, elastically compressed against the poles of the cell. For further details, reference is obviously made to EP4092795 since the structure of the battery pack described therein represents a starting point which can be improved thanks to the present invention. In particular, such improvement, as it will become clear, concerns the point of contact between the described spring elements and the poles of the cell because, as inferable, the measurement of the voltage of the cells, and thus the operation of the battery pack controlled by the control unit, are strictly linked to the "contact" between tab and the end of the spring. Currently, the free ends of the springs enter into contact with the cells at welds provided for connecting the poles to one another and through which the power of the battery passes. In such sense, these welds may not be eliminated, nor may they be reduced at will, because the performance of the overall battery module depends on them. Such known contact between springs and cell has some drawbacks. In fact, the welds can be bad current conductors and can also generate in the contact area the presence of impurities and roughness which can lead to the loss of contact or can ruin the covering of the springs thereby triggering undesired corrosion mechanisms.

Starting from such prior art, there is thus the current need to improve the contact zone between the aforementioned springs measuring the voltage and the poles of the cells so as to overcome the mentioned drawbacks.

### DESCRIPTION OF THE INVENTION

The object of the present invention is thus to provide a battery pack for an electric-powered road vehicle capable of overcoming the drawbacks described above. Besides the battery pack per se, the present invention also extends to the electric road vehicle equipped with such battery pack.

Starting point of the present invention is a battery pack comprising:
- a plurality of electrochemical cells, preferably with lithium ion technology, in which the cells are planar and arranged in a pack pattern side by side so as to form at least one module; as is known, each cell comprises two terminal poles which according to the present invention are brought back at a first edge of the cell so that they can be easily connected to one another by a longitudinal welding line along the edge (as it will be evident, preferably a welding line with some interruptions for making a sort of dashed welding line). As is known, the length of the longitudinal welding may not be reduced at will because it must satisfy design specifications (the power of the battery passes through the welding) and thus the above-mentioned interruptions are only a few small sections of the length of the edge of the cells;
- a support (preferably in the form of a planar substrate made of non-conductive material) installed in the battery so as to have a separate face facing the terminal poles of the cells;
- a plurality of spring-conducting elements, namely elastically deformable conducting elements, having first ends coupled to the support and second ends intended to enter in contact (mediated contact, as it will become clear) with the poles so as to allow measuring the voltage of the cells or to power with current some external devices. In particular, the spring-conducting elements are arranged in rows parallel to one another in positions such that, when the battery pack is in use, each row of the spring-conducting elements is pressed against the terminal poles along the edge of a corresponding cell. In this manner, a conductive bridge is made between each cell and the support for measuring the voltage.

Such structure is known, for example it is described in EP4092795 by the same Applicant, and thus the person skilled in the art has no need for other details in order to understand the elements listed above.

Starting from such known structure, the present invention proposes to provide each cell with a further element, namely a conductive plane, which covers the terminal poles (is interposed between the poles and the corresponding row of spring-conducting elements), wherein each conductive plane is constrained to the corresponding terminal poles by means of points or transverse welding lines only in specific positions. Such welding points are in particular at the separation space provided between two adjacent spring-conducting elements of the same row so that, when the battery is in use and the spring-conducting elements are pressed against the conductive plane, the free ends of the springs are in contact with the conductive plane in zones unprovided with welding points or lines.

The lengths of these welding points can be limited because the design characteristics (the passing of the power of the battery) are entrusted to the longitudinal welding line placed below the conductive plane, namely on the opposite side with respect to the springs. The fact that the springs are in contact with zones of a surface unprovided with welds allows overcoming the drawbacks mentioned with reference to the prior art. Furthermore, the conductive plane is thin and thus there are no undesired bulks.

Preferably, as already mentioned in the foregoing, each longitudinal welding line connecting corresponding terminal poles is a non-continuous line along the entire edge of the cell but it is of the "dashed" type, namely has discontinuity points or welding gaps. The interruption points of the longitudinal welding line are not random but are exactly at the connecting points or connecting transverse welding lines made on the new conductive planes. In this manner, the points or transverse welding lines do not overlap with the longitudinal welding lines.

Preferably, the terminal poles are made in the form of conductive plates overlapped along substantially the entire first edge of each cell.

Preferably, the battery pack further comprises:
- a box-shaped support structure with a back wall, two side walls and an opening opposite the back wall from which the terminal poles of the cells are accessible;
- a cover coupled to the support structure at the opening; in this case, the support supporting the spring elements is in the form of a substrate coupled to the cover and facing the cells;
- at least one voltage sensing device of the cells supported by the support and connected to the spring elements for monitoring the voltage of each cell.

As is clear, the innovative element provided by the present invention is the conductive plane covering the poles and the longitudinal welding line joining them. In order to enable the safe manoeuvrability and installation thereof in the battery, each conductive plane is coupled to a handling body made of non-conductive material. Preferably, each handling body made of non-conductive material comprises a bridge portion parallel to the corresponding conductive plane and two side portions configured to couple to corresponding elements of the battery pack and guarantee the correct positioning of the new conductive plane.

Preferably, the new conductive planes, the spring-conducting elements, the terminal poles are made of the same conductive material.

Finally, the present invention also extends to every electric-powered road vehicle in which a battery pack, as object of the appended claims, is installed. Preferably, the battery pack is arranged transversely to a longitudinal direction of the vehicle and is mounted on a frame at the back of a passenger compartment.

### BRIEF DESCRIPTION OF THE DRAWINGS

The present invention will now be described with reference to the accompanying drawings, which illustrate some non-limiting example embodiments thereof, wherein:
- Figure 1 is a schematic perspective view of an electric-powered vehicle which can be equipped with a battery pack in accordance with the present invention;
- Figure 2 is a schematic perspective view of a battery pack for an electric-powered vehicle which can be improved in accordance with the present invention;
- Figure 3 is an exploded view of the battery pack of Figure 2;
- Figure 4 is an enlarged view of a detail of a module of the battery pack of Figure 3;
- Figure 5 shows an enlarged view of a detail of the battery pack of Figure 3 in which spring elements are present for measuring the voltage of the cells connecting the poles of the cells to a control unit; in such figure, the coupling according to the prior art between the springs and the poles of the cells of the battery pack is schematized;
- Figure 6 shows an enlarged view of a detail of the battery pack of Figure 3 in which spring elements are present for measuring the voltage of the cells connecting the poles of the cells to the control unit; in such figure, a first step of making a coupling according to the present invention between the springs and the poles of the cells of the battery pack is schematized;
- Figure 7 shows an enlarged view of a detail of the battery pack of Figure 3 in which spring elements are present for measuring the voltage of the cells connecting the poles of the cells to a control unit; in such figure, a second step of making the coupling according to the present invention between the springs and the poles of the cells of the battery pack is schematized;
- Figure 8 shows an enlarged view of an additional component which has been introduced in the battery pack for making the coupling according to the present invention between the springs and the poles of the cells of the battery pack.

### PREFERRED EMBODIMENTS OF THE INVENTION

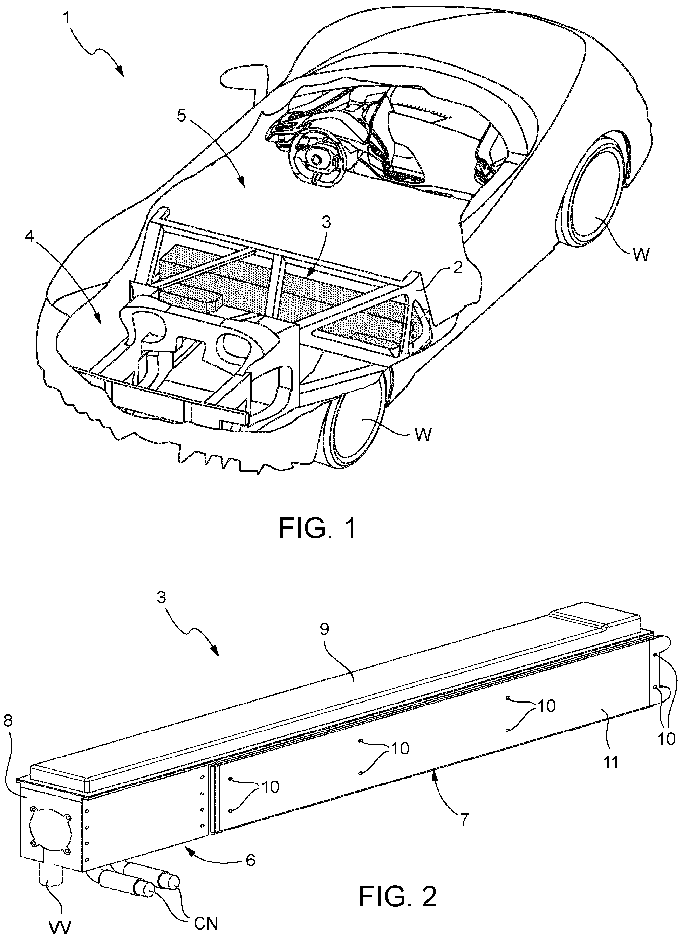

Referring to Figure 1, reference numeral 1 indicates, as a whole, a road vehicle provided with two front wheels W and two rear wheels W. The road vehicle 1 is a vehicle powered at least partially electrically and is provided with a frame 2. The road vehicle 1 comprises a battery pack 3, in this example supported by the frame 2 inside an engine compartment 4. As is visible, preferably the battery pack is arranged at the back of a passenger compartment 5, for example at a vehicle floor, behind the seats contained inside the passenger compartment 5.

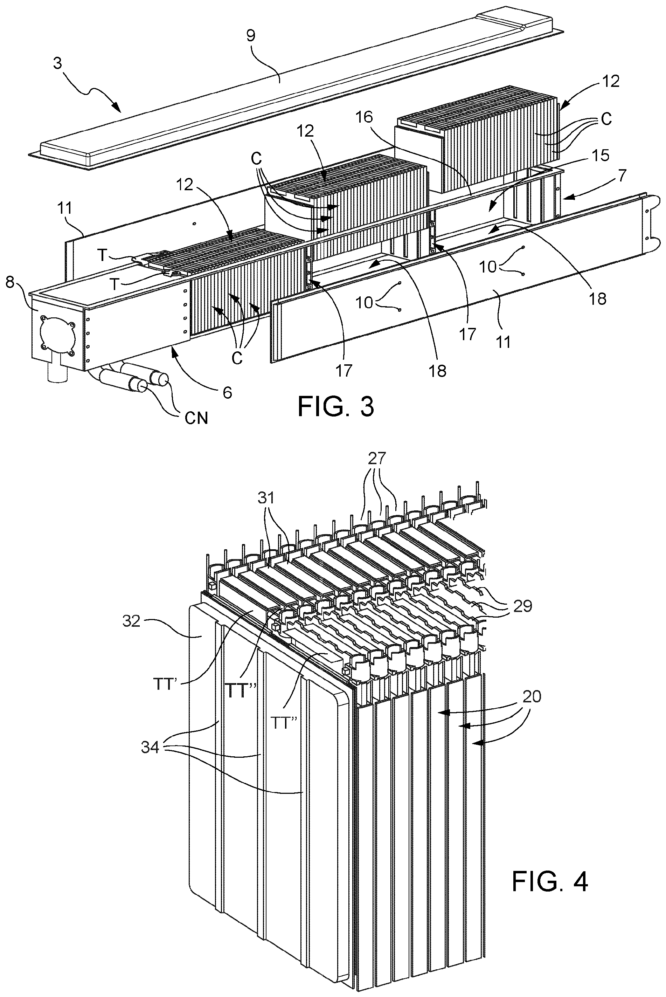

Figure 2 shows an example of a battery pack 3 which can be improved according to the present invention. In this example, the battery pack 3 has a substantially elongated parallelepiped shape and can be arranged transversely to a longitudinal axis of the vehicle. In particular, the battery pack 3 is suitable for being connected to an electric propulsion system (not illustrated) of the vehicle 1 and is adapted to store the electric energy produced by an electric machine (not illustrated) or released by other sources. As is illustrated in Figures 2 and 3, the battery pack 3 comprises at least one portion 6 configured to house a battery control and monitoring system 8 (normally called BMS - "Battery Management System"), adapted to control the operating parameters of the battery. The battery comprises, as is known, a plurality of cells and the ends of such cells C are connected to terminals T at the portion 6. Two connectors CN project out of the control system 8, said connectors CN being configured to conduct current from and towards the control system 8. The battery pack 3 further comprises a portion 7 configured to house the electrochemical cells C (i.e.) the active material of the battery pack 3. As is illustrated for example in Figure 3, the vehicle battery pack 3 comprises a support structure 15 comprising, in turn, at least two elongated perimeter elements 16 and 18 facing each other, which define between them a box-like portion BP. The battery pack 3 further comprises one or more bulkheads 17 arranged so as to divide the box-like portion BP delimiting at least two housings, in which the bulkheads 17 are arranged transversely to the two perimeter elements 16 and 18 facing each other. In other words, the perimeter elements 16 and 18 define two parallel planes, between which the bulkheads 17 extend transversely (perpendicularly). In the non-limiting embodiment of Figure 3, the bulkheads 17 delimit, inside the box-like portion BP, three different housings. The electrochemical cells C are of planar type, electrically connected and parallel both to one another and to the bulkheads 17 and divided, in this example, into three modules 12. As is visible in Figure 4, in this example the modules 12 each comprise at least two insertion plates 32, arranged at the ends of each module 12, parallel to the bulkheads 17, and configured to facilitate the insertion of each module 12 in compression inside the relative housing, so that the compression remains also following the insertion. In such manner, the modules 12 of cells C are compressed outside the housing and inserted maintaining the compression. By so doing, the cells C remain compressed between the two bulkheads 17 which delimit the respective housing. In this example, each insertion plate 32 comprises guiding elements 34 configured to direct the module 12 during the insertion into the respective housing. As is visible in the example of Figure 4, the battery pack 3 comprises a plurality of heat dissipating elements 20. As is known and as is visible in the example of Figure 4, each cell C comprises a pair of terminal poles TT', TT" (positive and negative, i.e. cathode and anode), extending from the same side of the cells C. The poles TT', TT" are supported by a support 27 made of plastic material. In order to prevent the contact between two adjacent cells, the support 27 has a separator 29. In particular, the connection of the terminal poles TT', TT" is made at one or more connection planes 31.

Going back to Figure 2, the battery pack 3 comprises at least one cooling panel 11, arranged at the at least one side surface and configured to be fixed to the support structure 15 by means of fixing elements 10, 10' so as to dissipate the heat transmitted by the dissipating elements 20. The battery pack 3 comprises a top opening, hermetically closed by a cover element 9.

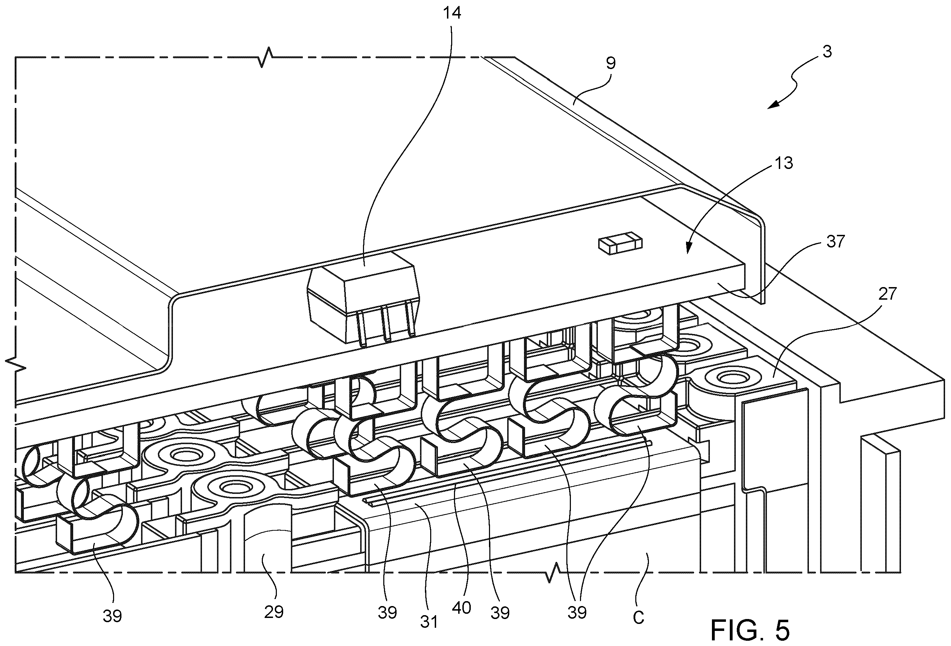

Figure 5 shows an enlarged cutaway view of a detail of the battery pack of Figure 3. Such view shows the presence of a control unit 13 comprising a substrate 37 constrained to the cover 9 facing the connection planes 31 of the terminal poles TT', TT" of the cells. The substrate 37 supports a plurality of elements 14 configured to control the operating parameters of the electrochemical cells C of the module 12 (voltage, temperature, ...). In Figure 5, reference numeral 39 indicates elastically deformable conducting contact elements of the spring type for sensing the voltage of the cells. Such spring elements 39 are configured to be, in use, elastically compressed between the planar support substrate 37 and the plane 31 of the terminal poles TT', TT". For such purpose, a plurality of springs 39 is provided arranged in single rows so that more than one spring 39 is at the plane 31 of the terminal poles TT', TT" of each electrochemical cell C. The coupling according to the prior art between the springs 39 and the plane 31 of the poles of the cells of the battery pack is schematized in Figure 5. In particular, the coupling between the overlapped terminal poles TT', TT" is made by means of a continuous welding line 40 which substantially develops along the entire length of the plane 31 and of the edge of the underlying cell. The contact of the springs 39 with the plane 31 thus occurs at the welding line 40 and this involves a series of drawbacks (described in the foregoing).

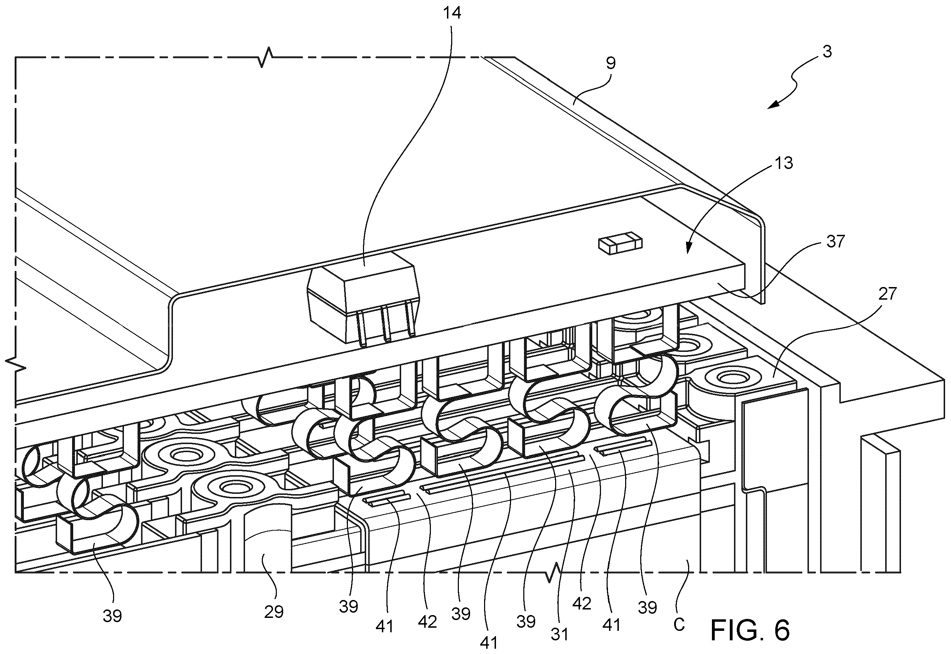

Figure 6 shows an enlarged view of a detail of the battery pack of Figure 3 in which spring elements 39, described in the foregoing, are present for measuring the voltage of the cells and in such figure a first step of making a coupling according to the present invention between the springs and the poles of the cells of the battery pack in order to optimize the contact zone of the springs 39 is schematized. As is visible in Figure 6, also in this case, a welding is performed along the edge of the cell so as to make the coupling between the overlapped terminal poles TT', TT". However, in an innovative manner in this case the longitudinal welding line 41 is not continuous but made in the form of portions in series of welding alternated with portions in which the welding is not performed. In particular, such portions in which the welding is not performed are located at the space provided between two adjacent springs 39 of the same row. Reference numeral 42 identifies the portions unprovided with the longitudinal welding line 41.

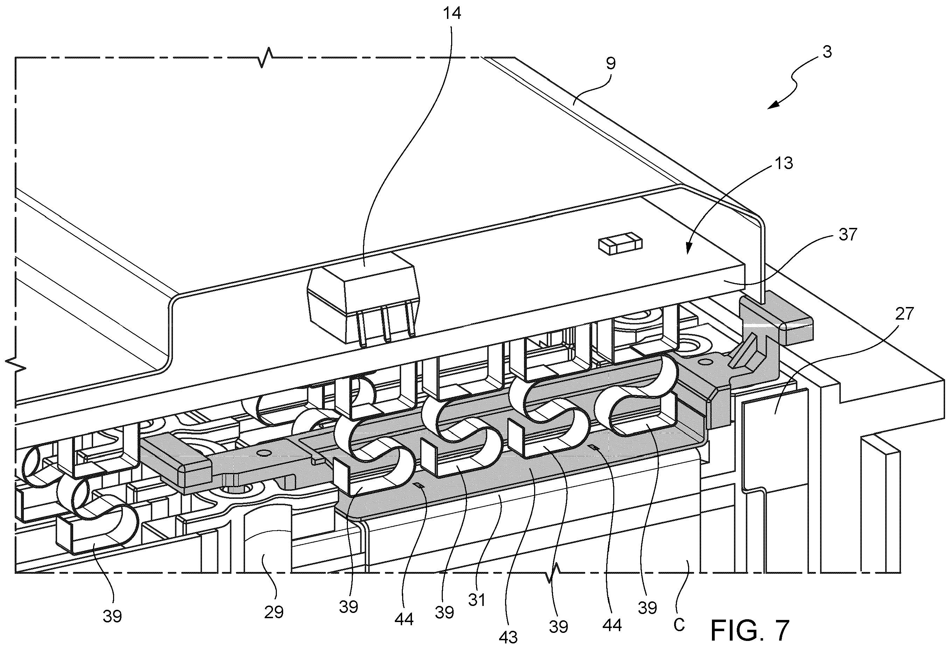

Figure 7 shows an enlarged view of the detail of the battery pack of Figure 6 in which a second step of making the coupling according to the present invention between the springs and the poles of the cells of the battery pack is schematized. As is visible in such figure, the invention provides for the presence of a conductive plane 43 which covers the longitudinal welding line 41 and which makes an intermediate layer between the springs 39 and the underlying joining plane 31 joining the poles. The connection between such conductive plane 43 and the plane 31 is obtained by means of welding points or transverse welding lines 44 performed at the portions 42 previously left unprovided with the longitudinal welding line 41. Therefore, the transverse welding lines 44 are located at the space between two adjacent springs 39 of the row and in this manner when the springs 39 are pressed towards the cells C, they are in contact with a surface zone without welding, namely the portions of the conductive plane 43 between the transverse welding lines 44. This solution achieves the desired results because in this manner impurities and roughness deriving from the welding are not present in the contact area and therefore the possibility of loss of contact or of damage of the covering of the springs is reduced.

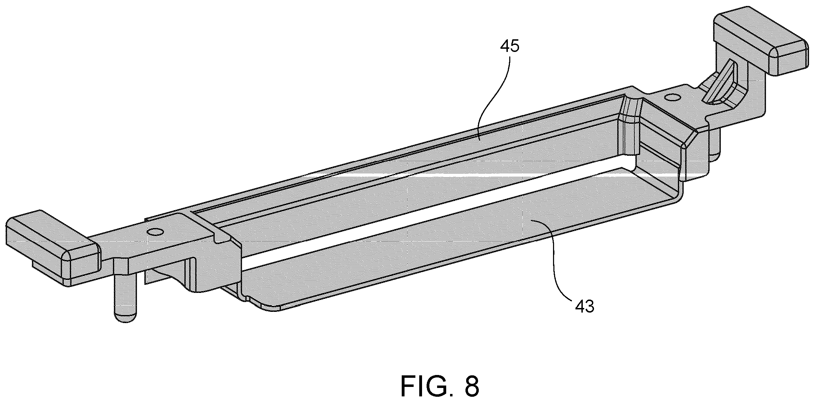

Finally, Figure 8 shows how the conductive plane 43 is supported by a handling structure 45 made of non-conductive material, in this case bridge-shaped, for allowing the operators to safely and precisely position the plane 43 on the poles of the cells.

## Claims

1. Battery pack for an electric-powered road vehicle (1), wherein the battery pack (3) comprises:
- a plurality of planar electrochemical cells (C) arranged in a pack pattern side by side; wherein each cell (C) comprises terminal poles (TT', TT") at a first edge;
- a support (37) facing the terminal poles (TT', TT") of the cells (C);
- a plurality of elastically deformable spring-conducting elements (39) having first ends coupled to the support (37), wherein the spring-conducting elements (39) are arranged in rows so that when the battery pack (3) is in use each row of the spring-conducting elements (39) is pressed against the terminal poles (TT', TT") of a corresponding cell (C) to make a conductive bridge between each cell (C) and the support (37);
wherein the terminal poles (TT', TT") of each cell (C) are connected to one another by a longitudinal welding line (41) parallel to the first edge of the corresponding cell (C); **characterized by** the fact that:
for each cell (C) a conductive plane (43) is provided between the terminal poles (TT', TT") and the corresponding row of spring-conducting elements (39); wherein each conductive plane (43) is constrained to the corresponding terminal poles (TT', TT") by means of points or transverse welding lines (44) at the space provided between two adjacent spring-conducting elements (39) of the same row so that when the battery is in use the spring-conducting elements (39) are pressed against portions of the conductive planes (43) unprovided with welding points or lines.

2. Battery pack as claimed in claim 1, wherein for each cell (C) a joining plane (31) joining the terminal poles (TT', TT") is provided, wherein the longitudinal welding line (41) connecting the terminal poles (TT', TT") of each cell (C) being made on the corresponding joining plane (31) below the conductive plane (43).

3. Battery pack as claimed in claim 1 or 2, wherein each longitudinal welding line (41) connecting the corresponding terminal poles (TT', TT") is a dashed line, the points or transverse welding lines (44) connecting the conductive planes (43) to the terminal poles (TT', TT") being at the gaps of the dashed longitudinal welding lines (41) so that the points or transverse welding lines (44) do not overlap with the longitudinal welding lines (41).

4. Battery pack as claimed in any of the preceding claims, wherein the terminal poles (TT', TT") are made in the form of a conductive plate along substantially the entire first edge of each cell.

5. Battery pack as claimed in any of the preceding claims, wherein the battery pack also comprises:
- a box-shaped support structure (15) with a back wall and two side walls and an opening opposite the back wall from which the terminal poles (TT', TT") of the cells (C) are accessible;
- a cover (9) coupled to the support structure (15) at the opening; the support (37) supporting the spring elements (39) being in the form of a substrate coupled to the cover (9) and facing the cells (C).
- at least one voltage sensing device (14) of the cells (C) supported by the support (37) and connected to the spring elements (39) to monitor the voltage of each cell (C).

6. Battery pack as claimed in any of the preceding claims, wherein each conductive plane (43) is coupled to a handling body (45) made of non-conductive material.

7. Battery pack as claimed in claim 6, wherein the handling body (45) of non-conductive material comprises a bridge portion parallel to the corresponding conductive plane (43) and two side portions configured to couple to corresponding elements of the battery pack (3).

8. Battery pack as claimed in any of the preceding claims, wherein the conductive planes (43), the spring-conducting elements (39), the terminal poles (TT', TT") are made of the same conductive material.

9. Electric-powered road vehicle (1), wherein the vehicle (1) comprises a battery pack (3) according to any of the preceding claims.

10. Vehicle as claimed in claim 9, wherein the battery pack (3) is arranged transversely to a longitudinal direction of the vehicle (1) and is mounted on a frame (2) at the back of a passenger compartment (5).

## Patentansprüche

1. Akkupack für ein elektrisch betriebenes Straßenfahrzeug (1), wobei das Akkupack (3) Folgendes umfasst:
- eine Vielzahl von planaren elektrochemischen Zellen (C), die in einem Packmuster nebeneinander angeordnet sind; wobei jede Zelle (C) Anschlusspole (TT', TT") an einer ersten Kante umfasst;
- einen Träger (37), der den Anschlusspolen (TT', TT'') der Zellen (C) zugewandt ist;
- eine Vielzahl von elastisch verformbaren federleitenden Elementen (39) mit ersten Enden, die an den Träger (37) gekoppelt sind, wobei die federleitenden Elemente (39) in Reihen angeordnet sind, so dass bei Verwendung des Akkupacks (3) jede Reihe der federleitenden Elemente (39) gegen die Anschlusspole (TT', TT'') einer entsprechenden Zelle (C) gedrückt wird, um eine leitende Brücke zwischen jeder Zelle (C) und dem Träger (37) zu bilden;
wobei die Anschlusspole (TT', TT'') jeder Zelle (C) durch eine Längsschweißlinie (41) parallel zur ersten Kante der entsprechenden Zelle (C) miteinander verbunden sind;
**dadurch gekennzeichnet, dass**:
für jede Zelle (C) eine leitende Ebene (43) zwischen den Anschlusspolen (TT', TT'') und der entsprechenden Reihe von federleitenden Elementen (39) vorgesehen ist; wobei jede leitende Ebene (43) an den entsprechenden Anschlusspolen (TT', TT'') mittels Punkten oder quer verlaufenden Schweißlinien (44) an dem zwischen zwei benachbarten federleitenden Elementen (39) derselben Reihe vorgesehenen Raum so festgespannt ist, dass die federleitenden Elemente (39) bei Verwendung des Akkus gegen Abschnitte der leitenden Ebenen (43) gedrückt werden, die nicht mit Schweißpunkten oder -linien versehen sind.

2. Akkupack nach Anspruch 1, wobei für jede Zelle (C) eine Verbindungsebene (31) vorgesehen ist, die die Anschlusspole (TT', TT") verbindet, wobei die Längsschweißlinie (41), die die Anschlusspole (TT', TT") jeder Zelle (C) verbindet, auf der entsprechenden Verbindungsebene (31) unterhalb der leitenden Ebene (43) hergestellt ist.

3. Akkupack nach Anspruch 1 oder 2, wobei jede Längsschweißlinie (41), die die entsprechenden Anschlusspole (TT', TT") verbindet, eine gestrichelte Linie ist, wobei die Punkte oder Querschweißlinien (44), die die leitenden Ebenen (43) mit den Anschlusspolen (TT', TT") verbinden, an den Lücken der gestrichelten Längsschweißlinien (41) liegen, so dass sich die Punkte oder Querschweißlinien (44) nicht mit den Längsschweißlinien (41) überlappen.

4. Akkupack nach einem der vorhergehenden Ansprüche, wobei die Anschlusspole (TT', TT") in Form einer leitenden Platte entlang im Wesentlichen der gesamten ersten Kante jeder Zelle hergestellt sind.

5. Akkupack nach einem der vorhergehenden Ansprüche, wobei das Akkupack außerdem Folgendes umfasst:
- eine kastenförmige Trägerstruktur (15) mit einer Rückwand und zwei Seitenwänden und einer der Rückwand gegenüberliegenden Öffnung, von der aus die Anschlusspole (TT', TT") der Zellen (C) zugänglich sind;
- eine Abdeckung (9), die an der Öffnung mit der Trägerstruktur (15) gekoppelt ist; wobei der Träger (37), der die Federelemente (39) trägt, die Form eines Substrats hat, das mit der Abdeckung (9) gekoppelt ist und den Zellen (C) zugewandt ist
- mindestens eine Spannungserfassungsvorrichtung (14) für die Zellen (C), die von dem Träger (37) getragen werden und mit den Federelementen (39) verbunden ist, um die Spannung jeder Zelle (C) zu überwachen.

6. Akkupack nach einem der vorhergehenden Ansprüche, wobei jede leitende Ebene (43) mit einem Handhabungskörper (45) aus nicht leitendem Material gekoppelt ist.

7. Akkupack nach Anspruch 6, wobei der Handhabungskörper (45) aus nicht leitendem Material einen Brückenabschnitt parallel zu der entsprechenden leitenden Ebene (43) und zwei Seitenabschnitte umfasst, die konfiguriert sind, um an entsprechende Elemente des Akkupacks (3) gekoppelt zu werden.

8. Akkupack nach einem der vorhergehenden Ansprüche, wobei die leitenden Ebenen (43), die federleitenden Elemente (39) und die Anschlusspole (TT', TT") aus demselben leitenden Material hergestellt sind.

9. Elektrisch betriebenes Straßenfahrzeug (1), wobei das Fahrzeug (1) ein Akkupack (3) nach einem der vorhergehenden Ansprüche umfasst.

10. Fahrzeug nach Anspruch 9, wobei das Akkupack (3) quer zu einer Längsrichtung des Fahrzeugs (1) angeordnet ist und an einem Rahmen (2) an der Rückseite eines Fahrgastraums (5) montiert ist.

## Revendications

1. Bloc-batterie pour véhicule routier à propulsion électrique (1), le bloc-batterie (3) comprenant :
- une pluralité de cellules électrochimiques planaires (C) disposées en paquet côte à côte ; chaque cellule (C) comprenant des pôles de borne (TT', TT'') au niveau d'un premier bord ;
- un support (37) faisant face aux pôles de borne (TT', TT'') des cellules (C) ;
- une pluralité d'éléments conducteurs à ressort (39) élastiquement déformables comportant des premières extrémités couplées au support (37), les éléments conducteurs à ressort (39) étant disposés en rangées de sorte que lorsque le bloc-batterie (3) est utilisé, chaque rangée d'éléments conducteurs à ressort (39) est pressée contre les pôles de borne (TT', TT'') d'une cellule correspondante (C) pour créer un pont conducteur entre chaque cellule (C) et le support (37) ;
les pôles de borne (TT', TT'') de chaque cellule (C) étant reliés entre eux par une ligne de soudure longitudinale (41) parallèle au premier bord de la cellule correspondante (C) ;
**caractérisé par le fait que** :
pour chaque cellule (C), un plan conducteur (43) est prévu entre les pôles de borne (TT', TT") et la rangée correspondante d'éléments conducteurs à ressort (39) ; chaque plan conducteur (43) étant contraint aux pôles de borne correspondants (TT', TT'') au moyen de points ou de lignes de soudure transversales (44) au niveau de l'espace prévu entre deux éléments conducteurs à ressort (39) adjacents de la même rangée, de sorte que lorsque la batterie est utilisée, les éléments conducteurs à ressort (39) sont pressés contre des parties des plans conducteurs (43) non pourvues de points ou de lignes de soudure.

2. Bloc-batterie selon la revendication 1, où pour chaque cellule (C) un plan de jonction (31) reliant les pôles de borne (TT', TT'') est prévu, la ligne de soudure longitudinale (41) reliant les pôles de borne (TT', TT'') de chaque cellule (C) étant réalisée sur le plan de jonction (31) correspondant en dessous du plan conducteur (43).

3. Bloc-batterie selon la revendication 1 ou 2, où chaque ligne de soudure longitudinale (41) reliant les pôles de borne correspondants (TT', TT'') est une ligne en pointillés, les points ou lignes de soudure transversales (44) reliant les plans conducteurs (43) aux pôles de borne (TT', TT'') se trouvant au niveau des espacements des lignes de soudure longitudinales (41) en pointillés de sorte que les points ou lignes de soudure transversales (44) ne se chevauchent pas avec les lignes de soudure longitudinales (41).

4. Bloc-batterie selon l'une quelconque des revendications précédentes, les pôles de borne (TT', TT'') se présentant sous la forme d'une plaque conductrice située sensiblement le long de la totalité du premier bord de chaque cellule.

5. Bloc-batterie selon l'une quelconque des revendications précédentes, le bloc-batterie comprenant également :
- une structure de support (15) en forme de boîte pourvue d'une paroi arrière et de deux parois latérales et d'une ouverture opposée à la paroi arrière à partir de laquelle les pôles de borne (TT', TT'') des cellules (C) sont accessibles ;
- un couvercle (9) couplé à la structure de support (15) au niveau de l'ouverture ; le support (37) soutenant les éléments à ressort (39) se présentant sous la forme d'un substrat couplé au couvercle (9) et faisant face aux cellules (C)
- au moins un dispositif de détection (14) de la tension des cellules (C) soutenu par le support (37) et relié aux éléments à ressort (39) pour surveiller la tension de chaque cellule (C).

6. Bloc-batterie selon l'une quelconque des revendications précédentes, où chaque plan conducteur (43) est accouplé à un corps de manipulation (45) réalisé en matériau non conducteur.

7. Bloc-batterie selon la revendication 6, le corps de manipulation (45) en matériau non conducteur comprenant une partie de pont parallèle au plan conducteur correspondant (43) et deux parties latérales configurées pour s'accoupler à des éléments correspondants du bloc-batterie (3).

8. Bloc-batterie selon l'une quelconque des revendications précédentes, les plans conducteurs (43), les éléments conducteurs à ressort (39) et les pôles de borne (TT', TT'') étant constitués du même matériau conducteur.

9. Véhicule routier à propulsion électrique (1), le véhicule (1) comprenant un bloc-batterie (3) selon l'une quelconque des revendications précédentes.

10. Véhicule selon la revendication 9, le bloc-batterie (3) étant disposé transversalement par rapport à la direction longitudinale du véhicule (1) et étant monté sur un cadre (2) à l'arrière de l'habitacle (5).
